# EUROPEAN PATENT SPECIFICATION

(11) **EP 2 798 244 B1**
(45) Date of publication and mention of the grant of the patent: **30.03.2016**
(21) Application number: 11810582.4
(22) Date of filing: 28.12.2011
(51) Int. Cl.: F16H 61/662

(54) **METHOD FOR CONTROLLING A CONTINUOUSLY VARIABLE TRANSMISSION WITH AN ELECTRO-HYDRAULIC CONTROL SYSTEM**
VERFAHREN ZUM STEUERN EINES STUFENLOSEN GETRIEBES MIT EINEM ELEKTROHYDRAULISCHEN STEUERSYSTEM
PROCÉDÉ DE COMMANDE D'UNE TRANSMISSION À VARIATION CONTINUE AVEC UN SYSTÈME DE COMMANDE ÉLECTROHYDRAULIQUE

(43) Date of publication of application: 05.11.2014
(73) Proprietor: Robert Bosch GmbH, 70442 Stuttgart (DE)
(72) Inventor: VAN WIJK, Wilhelmus Johannes Maria, NL-5071 AN Udenhout (NL)
(74) Representative: Plevier, Gabriel Anton Johan Maria
(86) International application number: PCT/EP2011/006590
(87) International publication number: WO 2013/097876

(56) References cited:
- WO-A1-2009/084952
- DE-A1- 3 727 633
- JP-A- 61 215 853

## Description

The present invention relates to a continuously variable transmission with an electro-hydraulic control system for a drive line of a motor vehicle. In particular, the invention relates to a method for controlling said transmission as described in the preamble of claim 1.

Such a transmission is known from European patent publication EP-A-2 066 929. The known transmission is provided with a drive belt and two pulleys, each provided with two conical pulley sheaves which are movable relative to each other in the axial direction, between which pulley sheaves a part of the drive belt is accommodated. During operation of the transmission the drive belt is clamped between the pulley sheaves of the two pulleys by forcing the sheaves of a pulley towards each other under the influence of a hydraulic pressure exerted upon at least one sheave. The level of these hydraulic pulley pressures is the determining factor here for the transmission ratio, on the one hand, and the maximum torque to be transmitted between the pulleys, on the other hand.

In order to be able to accurately regulate the abovementioned pulley pressures to the desired level, the transmission is provided with an electro-hydraulic control system. Here, the electro-hydraulic control system comprises an oil reservoir, an oil pump for delivering an oil flow from the reservoir to a main hydraulic line of the control system and a line pressure valve for regulating the hydraulic pressure in such main line. Such a flow of pressurized oil delivered the oil pump is applied for realizing the pulley pressures, for effecting auxiliary functions of the transmission, such as the opening and/or closing of clutches, as well as for cooling and/or lubrication of moving parts of the transmission.

It is well-known that during operation of the transmission the oil flow requirement of the transmission fluctuates strongly between a minimal flow for lubrication and cooling purposes only, to a maximal flow for a rapid change of the transmission ratio, such as occurs during an emergency stop of the motor vehicle, at full-throttle acceleration thereof or in so called "step-mode" ratio control. Accordingly, it is a common development aim to optimize the electro-hydraulic control system in relation to such fluctuating oil flow requirement. For example EP-A-2 066 929 in this respect teaches to allow a surplus of the pump flow relative to the required oil flow to bypass the line pressure valve. Moreover, EP-A-2 066 929 teaches to provide the electro-hydraulic control system with two pumps whereof one pump can be switched between being connected to the main line and to deliver a flow of oil in parallel with the other pump and being completely disconnected from the main line. In this known electro-hydraulic control system, such switching occurs in dependency on a lubrication pressure. More in particular, EP-A-2 066 929 teaches to apply a pump flow control valve that switches the said one pump in the above-described manner in dependence on the level of the lubrication pressure, which is related to the speed of the vehicle engine and thus the speed and oil flow of the pumps.

WO 2009/084952 discloses also all the features of the preamble of claim 1.

Although very good (hydraulic) transmission efficiency can indeed be obtained with such known electro-hydraulic control system, it does suffer from the drawback that operating conditions can occur wherein the line pressure drops below a desired level therefor. According to the invention such disadvantageous phenomenon in particular occurs when the said one pump is not connected to the main line at the time of the above-mentioned transmission ratio change, i.e. at the time a rapid up- or downshift of the transmission is demanded. From the instance that such rapid up- or downshift commences, it takes a while before the lubrication pressure decreases enough to effect that the pump flow control valve switches the said one pump in parallel with the other pump, during which time the line pressure will drop, potentially to below the said desired level therefore.

It is an object of the present invention to improve the control behavior of the known transmission, more specifically to avoid the above-mentioned disadvantageous phenomenon from occurring. Hereto, the invention provides the method for controlling the continuously variable transmission according to claim 1 hereinafter.

In the transmission according to the invention, before a transmission ratio change, or at least before a rapid up- or downshift is effected by the electro-hydraulic control system, it is ensured that the said one pump is connected to the main line by reducing the lubrication pressure by connecting an additional user to a lubrication circuit part of the overall hydraulic circuit of the control system. As a result, a maximum oil flow, i.e. as delivered by both pumps in parallel is then available before changing the transmission ratio.

In a sense, the invention adds to the known, passive switching of the said one pump, the feature that such switching can also be effected actively by the electro-hydraulic control system, albeit not by directly acting on a valve that actually performs such switching, but indirectly, by means of a further valve.

According to the invention such an impending (rapid) transmission ratio change is monitored and/or detected using electronic means of the electro-hydraulic control system, for example by calculating the time-derivative of a desired value of the transmission ratio determined by the control system in response to the transmission operating conditions. Alternatively, the said desired value of the transmission ratio may be directly compared with an actual transmission ratio to calculate the difference there between.

Preferably, in accordance with the invention, the additional user is connected to the lubrication circuit shortly before the said transmission ratio change is effected by the electro-hydraulic control system, i.e. shortly before a changed desired transmission ratio is applied by the control system to regulate the pulley pressures. In this respect, a time delay of 50 milliseconds was found to provide good results in practice.

More preferably, in accordance with the invention, the additional user is only connected to the lubrication circuit of the electro-hydraulic circuit if the impending transmission ratio change exceeds a certain magnitude in terms of the step-size and/or the change-speed associated therewith.

In the method according to the invention the oil flow effectively delivered by the pumps to the electro-hydraulic control system is advantageously adapted to impending operating conditions circumstances, at least when such impending operating conditions require a large oil flow, which conditions are, in particular, represented by a rapid up- or downshift of the transmission ratio.

In an elaboration of the method according to the invention the additional user is an (increased) lubrication flow directed to a moving part of the transmission such as the drive belt.

In a further elaboration of the method according to the invention a hydraulic accumulator is applied in the lubrication circuit. In doing so an unwanted oscillation or fluttering of the pump flow control valve, which could otherwise occur in response to small fluctuations of the lubrication pressure, is suppressed.

The invention will now be explained in greater detail by way of example with reference to the drawing, in which:
Figure 1 is a diagrammatic view of a part of a continuously variable transmission with a drive belt and two pulleys;
Figure 2 diagrammatically shows an electro-hydraulic control system of the transmission of Figure 1; and
Figure 3 shows an exemplary embodiment of the electro-hydraulic control system in accordance with the invention.

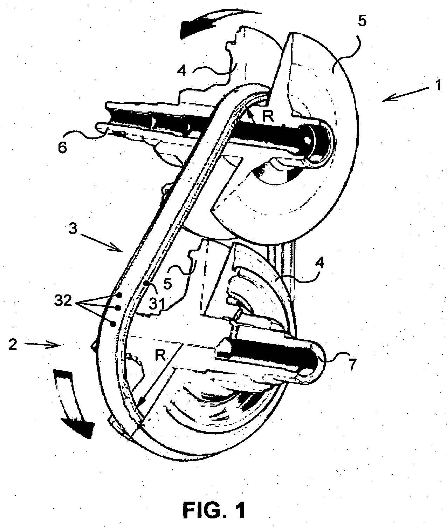

Figure 1 shows the central parts of a continuously variable transmission, such as is used in the drive line of a motor vehicle such as a passenger car. The transmission is generally known per se and comprises a primary pulley 1 and a secondary pulley 2, each pulley comprising two pulley sheaves 4, 5, and with a drive belt 3 wrapped around the pulleys 1, 2 and accommodated, in part, between the pulley sheaves 4, 5 thereof. The pulley sheaves 4, 5 are of a conical shape, and at least one sheave 4 of each pulley 1, 2 is movable axially over a respective shaft 6, 7 on which the sheaves 4, 5 of a pulley 1, 2 are fitted. The drive belt 3 comprises a pair of endless carrier elements 31, each composed of a set of nested, thin metal rings, which carry a series of metal transverse elements 32 that absorb forces exerted thereon by the pulley sheaves and that are moved by a rotation of a driving pulley 1, pushing each other along the carrier elements 31 to a driven pulley 2. Such a drive belt 3 is also known as the Van Doorne push belt and is described in further detail in, for example, European patent EP-0626526-A1.

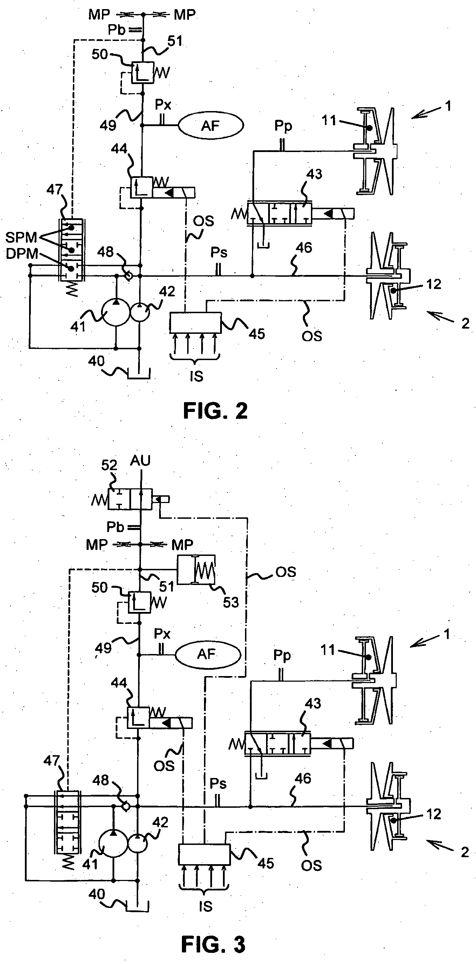

The transmission furthermore comprises an electro-hydraulic control system that imposes a hydraulic pressure on each one of the above-mentioned moveable sheaves 4 of the pulleys 1, 2, in such a way that the drive belt 3 is clamped between the pulley sheaves 4, 5 of the two pulleys 1, 2. As a result, mechanical power can be transmitted between the pulleys 1, 2 by means of friction in the conical contact faces between the respective sheaves 4, 5 thereof and the drive belt 3. An example of such an electro-hydraulic control system is shown diagrammatically in Figure 2.

The electro-hydraulic control system is equipped to regulate a desired (hydraulic) secondary pressure Ps in a secondary pressure cylinder 12 of the secondary pulley 2 and a desired (hydraulic) primary pressure Pp in a primary pressure cylinder 11 of the primary pulley 1. In the electro-hydraulic control system shown here, said control system, to that end, is provided with a reservoir 40 for hydraulic medium, i.e. oil, two oil pumps 41, 42 for generating an oil flow, a primary valve 43 for regulating the primary pressure Pp and a secondary valve 44 for regulating the secondary pressure Ps. These two valves 43, 44 are controlled electronically by means of a valve control unit 45 using input signals IS, control logic software and output signals OS.

Both oil pumps 41, 42 can deliver oil to a main line 46 of the control system during operation of the transmission, but one pump 41 can also be disconnected from the main line 46 by means of a pump flow control valve 47 and a check-valve 48 of the control system working in cooperation.

In the shown control system, the secondary pressure Ps corresponds to the highest or main system pressure that is also denoted the pump or line pressure. The secondary valve 44 that regulates the line pressure Ps allows (excess) oil to pass into an auxiliary line 49 of the control system, wherefrom auxiliary functions AF of the transmission, such as the opening and/or closing of clutches, are supplied with oil. An auxiliary valve 50 controls an auxiliary pressure Px in the auxiliary line 49. This auxiliary valve 50 allows (excess) oil to pass into a lubrication circuit 51 of the control system, wherefrom moving parts MP of the transmission, such as the drive belt 3 or bearings, are supplied with oil.

A pressure Pb prevailing in the lubrication circuit 51 is also applied to operate the pump flow control valve 47, in particular to switch the said one pump 41 from being connected to the main line 46, i.e. dual pump mode or "DPM", when such lubrication pressure Pb is low, or from being disconnected from the main line 46, i.e. single pump mode or "SPM", when such lubrication pressure Pb is high. Actually, in its embodiment illustrated in figure 2, the pump flow control valve 47 is designed and arranged to disconnect an increasingly larger part of the oil flow delivered by the said one pump 41 from the main line 46 in response to an increasing lubrication pressure Pb, in stead of effecting an instantaneous switching of said one pump 41 between the main line 46 and the reservoir 40.

This known electro-hydraulic control system suffers from the drawback that, if a flow of oil from the main line 46 to the pressure cylinders 11, 12 of the pulleys 1, 2 increases rapidly, the main system pressure -here the secondary pressure Ps- dips below a desired or even required pressure level. More in particular, in case of an oil flow demand increase in the known control system, it can take a short while before the lubrication pressure Pb has decreased sufficiently for the switching of the pump flow control valve 47 from SPM to DPM, i.e. for (fully) connecting the said one pump 41 to the main line 46. The present invention aims to overcome such drawback.

The present invention is illustrated in Figure 3. Figure 3 depicts the electro-hydraulic control system of Figure 2, however, as augmented with technical features that implement the present invention by way of example.

According to the invention, the said switching of the pump flow control valve 47 from SPM to DPM is effected shortly in advance of the said oil flow demand increase. This functionality is implemented in the electro-hydraulic control system of figure 3 by way of a lubrication pressure release valve 52 controlled by the valve control unit 45 via a corresponding output signal OS thereof. By opening the lubrication pressure release valve 52, an oil flow away from the lubrication circuit 51 is realized and the lubrication pressure Pb drops to surely operate the flow control valve 47 to connect the said one pump 41 to the main line 46. In a sense, the lubrication pressure release valve 52, once opened, represents an additional user AU connected to the lubrication circuit 51 in parallel with the said moving parts MP. In fact, the oil flow through the lubrication pressure release valve 52 can also be directed to the said moving parts MP to avoid that these would be insufficiently lubricated when the lubrication pressure Pb drops in response to the opening of the lubrication pressure release valve 52.

Further according to the invention, a hydraulic accumulator 53 is applied in the lubrication circuit 51 as shown in figure 3 as well.

Obviously, the above functionality of the lubrication pressure release valve 52 needs to be supported by the control logic software of the valve control unit 45. According to the invention, such control logic software includes a function of monitoring an impending (rapid) transmission ratio change and -if such impending ratio change is detected- of opening the lubrication pressure release valve 52, for example for a pre-defined time period that has been pre-determined to surely effect the said dual pump mode (DPM).

It is noted that the lubrication pressure release valve 52 need not necessarily be implemented as a separate valve, i.e. solely dedicated to the switching of the pump flow control valve 47, but that is may also be incorporated in another valve of the electro-hydraulic control system, i.e. include/perform a further hydraulic function of the control system.

The present invention is not restricted to the embodiment described hereinabove, but also relates to all details in the drawing figures and the content of the following claims.

## Claims

1. Method for controlling a continuously variable transmission provided with a drive belt (6) that is fitted between a primary pulley (1) and a secondary pulley (2) of the transmission, each pulley having two pulley sheaves (4, 5) of which at least one pulley sheave (4) in each case is axially movable under the influence of a hydraulic pressure exerted in a pressure cylinder (11; 12) of a respective pulley (1; 2), and with an electro-hydraulic control system for controlling these cylinder pressures (Pp; Ps), which control system comprises two oil pumps (41, 42) capable of delivering oil to a main hydraulic line (46) of the control system, a main system pressure valve (44) for controlling a main system pressure (Ps) in the main hydraulic line (46) by allowing a flow of oil to pass, in part, to a lubrication circuit (51) of the control system, and a pump flow control valve (47) for selectively connecting to or disconnecting from the main hydraulic line (46) one pump (41) of the said two pumps (41; 42) in dependence on a lubrication pressure (Pb) prevailing in the lubrication circuit (51), which method at least entails the control of a transmission ratio between a rotational speed of the primary pulley (1) and a rotational speed of the secondary pulley (2), **characterized in that**, in advance of at least a certain type of transmission ratio change, the said one pump (41) is connected to the main hydraulic line (46) by reducing the lubrication pressure (Pb) by connecting an additional user (AU) to the lubrication circuit (51).

2. Method for controlling a continuously variable transmission according to claim 1, **characterized in that**, the said certain type of transmission ratio change is associated with an emergency stop of a motor vehicle wherein the transmission is applied.

3. Method for controlling a continuously variable transmission according to claim 1 or 2, **characterized in that**, the said certain type of transmission ratio change is initiated only after the said additional user (AU) has been connected to the lubrication circuit (51).

4. Method for controlling a continuously variable transmission according to claim 1, 2 or 3, **characterized in that**, the electro-hydraulic control system is provided with an electronically operable release valve (52) that is capable of connecting and disconnecting the said additional user (AU) to the lubrication circuit (51).

5. Method for controlling a continuously variable transmission according to the claim 4, **characterized in that**, the electro-hydraulic control system is provided with a valve control unit (45) that uses input signals (IS), control logic software and output signals (OS) to, directly or indirectly, control the cylinder pressures (Pp; Ps) and to operate the release valve (52).

6. Method for controlling a continuously variable transmission according to the claim 5, **characterized in that**, the valve control unit (45) does not operate the pump flow control valve (47), at least not directly.

7. Method for controlling a continuously variable transmission according to a preceding claim, **characterized in that**, the said additional user (AU) is an oil flow for the lubrication and/or cooling of moving parts of the transmission such as the drive belt (3).

8. Method for controlling a continuously variable transmission according to a preceding claim, **characterized in that**, in the lubrication circuit (51) of the electro-hydraulic control system a hydraulic accumulator is applied.

## Patentansprüche

1. Verfahren zum Steuern eines stufenlos verstellbaren Getriebes, das mit einem Antriebsriemen (6) versehen ist, der zwischen eine primäre Riemenscheibe (1) und eine sekundäre Riemenscheibe (2) des Getriebes eingesetzt ist, wobei jede Riemenscheibe zwei Riemenscheibenrollen (4, 5) besitzt, wobei wenigstens eine Riemenscheibenrolle (4) in jedem Fall unter dem Einfluss eines in einem Druckzylinder (11; 12) einer entsprechenden Riemenscheibe (1; 2) ausgeübten Hydraulikdrucks axial beweglich ist, und mit einem elektrohydraulischen Steuersystem zum Steuern dieser Zylinderdrücke (Pp; Ps) versehen ist, wobei das Steuersystem zwei Ölpumpen (41, 42), die Öl an eine Haupthydraulikleitung (46) des Steuersystems liefern können, ein Hauptsystemdruckventil (44), um einen Hauptsystemdruck (Ps) in der Haupthydraulikleitung (46) zu steuern durch Zulassen einer Strömung von Öl, damit sie sich zum Teil zu einem Schmierungskreis (51) des Steuersystems bewegt, und ein Pumpendurchflusssteuerventil (47), um eine Pumpe (41) der zwei Pumpen (41; 42) in Abhängigkeit von einem in dem Schmierungskreis (51) herrschenden Schmierungsdruck (Pb) wahlweise mit der Hydraulikleitung (46) zu verbinden oder von ihr zu trennen, umfasst, wobei das Verfahren wenigstens das Steuern eines Übersetzungsverhältnisses zwischen einer Drehzahl der primären Riemenscheibe (1) und einer Drehzahl der sekundären Riemenscheibe (2) zur Folge hat, **dadurch gekennzeichnet, dass** wenigstens vor einem bestimmten Typ einer Übersetzungsverhältnisänderung die eine Pumpe (41) mit der Haupthydraulikleitung (46) durch Verringern des Schmierungsdrucks (Pb) durch Verbinden eines zusätzlichen Verbrauchers (AU) mit dem Schmierungskreis (51) verbunden wird.

2. Verfahren zum Steuern eines stufenlos verstellbaren Getriebes nach Anspruch 1, **dadurch gekennzeichnet, dass** der bestimmte Typ einer Übersetzungsverhältnisänderung einem Nothalt eines Motorfahrzeugs, in dem das Getriebe verwendet wird, zugeordnet ist.

3. Verfahren zum Steuern eines stufenlos verstellbaren Getriebes nach Anspruch 1 oder 2, **dadurch gekennzeichnet, dass** der bestimmte Typ einer Übersetzungsverhältnisänderung nur initiiert wird, nachdem der zusätzliche Verbraucher (AU) mit dem Schmierungskreis (51) verbunden worden ist.

4. Verfahren zum Steuern eines stufenlos verstellbaren Getriebes nach Anspruch 1, 2 oder 3, **dadurch gekennzeichnet, dass** das elektrohydraulische Steuersystem mit einem elektronisch betätigbaren Entlastungsventil (52) versehen ist, das den zusätzlichen Verbraucher (AU) mit dem Schmierungskreis (51) verbinden und hiervon trennen kann.

5. Verfahren zum Steuern eines stufenlos verstellbaren Getriebes nach Anspruch 4, **dadurch gekennzeichnet, dass** das elektrohydraulische Steuersystem mit einer Ventilsteuereinheit (45) versehen ist, die Eingangssignale (IS), eine Steuerlogik-Software und Ausgangssignale (OS) verwendet, um die Zylinderdrücke (Pp; Ps) direkt oder indirekt zu steuern und das Entlastungsventil (52) zu betätigen.

6. Verfahren zum Steuern eines stufenlos verstellbaren Getriebes nach Anspruch 5, **dadurch gekennzeichnet, dass** die Ventilsteuereinheit (45) das Pumpendurchfluss-Steuerventil (47) zumindest nicht direkt betätigt.

7. Verfahren zum Steuern eines stufenlos verstellbaren Getriebes nach einem vorhergehenden Anspruch, **dadurch gekennzeichnet, dass** der zusätzliche Verbraucher (AU) eine Ölströmung für die Schmierung und/oder die Kühlung von beweglichen Teilen des Getriebes wie etwa des Antriebsriemens (3) ist.

8. Verfahren zum Steuern eines stufenlos verstellbaren Getriebes nach einem vorhergehenden Anspruch, **dadurch gekennzeichnet, dass** in dem Schmierungskreis (51) des elektrohydraulischen Steuersystems ein Hydraulikdruckspeicher verwendet wird.

## Revendications

1. Procédé de commande d'une transmission à variation continue munie d'une courroie (6) d'entraînement qui est ajustée entre une poulie primaire (1) et une poulie secondaire (2) de la transmission, chaque poulie comprenant deux disques (4, 5) de poulie parmi lesquels au moins un disque (4) de poulie dans chaque cas est mobile axialement sous l'influence d'une pression hydraulique exercée dans un cylindre (11 ; 12) à pression d'une poulie respective (1 ; 2), et d'un système de commande électrohydraulique servant à commander ces pressions (Pp ; Ps) de cylindres, ledit système de commande comportant deux pompes (41, 42) à huile capables de délivrer de l'huile à une canalisation hydraulique principale (46) du système de commande, une soupape (44) de pression principale du système servant à réguler une pression principale (Ps) du système dans la canalisation hydraulique principale (46) en laissant passer un écoulement d'huile, en partie, vers un circuit (51) de lubrification du système de commande, et une soupape (47) de commande d'écoulement de pompe destinée à connecter à ou à déconnecter sélectivement par rapport à la canalisation hydraulique principale (46) une pompe (41) parmi lesdites deux pompes (41 ; 42) en fonction d'une pression (Pb) de lubrification régnant dans le circuit (51) de lubrification, ledit procédé faisant intervenir au moins la commande d'un rapport de transmission entre une vitesse de rotation de la poulie primaire (1) et une vitesse de rotation de la poulie secondaire (2), **caractérisé en ce que**, préalablement à au moins un certain type de changement du rapport de transmission, ladite pompe (41) en question est connectée à la canalisation hydraulique principale (46) en réduisant la pression (Pb) de lubrification en connectant un utilisateur supplémentaire (AU) au circuit (51) de lubrification.

2. Procédé de commande d'une transmission à variation continue selon la revendication 1, **caractérisé en ce que** ledit type considéré de changement du rapport de transmission est associé à un arrêt d'urgence d'un véhicule à moteur où la transmission est appliquée.

3. Procédé de commande d'une transmission à variation continue selon la revendication 1 ou 2, **caractérisé en ce que** ledit type considéré de changement du rapport de transmission n'est amorcé qu'après que ledit utilisateur supplémentaire (AU) a été connecté au circuit (51) de lubrification.

4. Procédé de commande d'une transmission à variation continue selon la revendication 1, 2 ou 3, **caractérisé en ce que** le système de commande électrohydraulique est muni d'une soupape (52) de décharge actionnable électroniquement qui est capable de connecter et de déconnecter ledit utilisateur supplémentaire (AU) au circuit (51) de lubrification.

5. Procédé de commande d'une transmission à variation continue selon la revendication 4, **caractérisé en ce que** le système de commande électrohydraulique est muni d'une unité (45) de commande de soupape qui utilise des signaux d'entrée (IS), un logiciel à logique de commande et des signaux de sortie (OS) pour, directement ou indirectement, commander les pressions (Pp ; Ps) de cylindres et pour actionner la soupape (52) de décharge.

6. Procédé de commande d'une transmission à variation continue selon la revendication 5, **caractérisé en ce que** l'unité (45) de commande de soupape n'actionne pas la soupape (47) de commande d'écoulement de pompe, du moins pas directement.

7. Procédé de commande d'une »transmission à variation continue selon une revendication précédente, **caractérisé en ce que** ledit utilisateur supplémentaire (AU) est un écoulement d'huile servant à la lubrification et/ou au refroidissement de parties en mouvement de la transmission, comme la courroie (3) d'entraînement.

8. Procédé de commande d'une transmission à variation continue selon une revendication précédente, **caractérisé en ce que**, dans le circuit (51) de lubrification du système de commande électrohydraulique, un accumulateur hydraulique est appliqué.
